# EUROPÄISCHE PATENTANMELDUNG

(11) **EP 2 180 681 A1**
(43) Veröffentlichungstag der Anmeldung: **28.04.2010**
(21) Anmeldenummer: 09173470.7
(22) Anmeldetag: 20.10.2009
(51) Int. Cl.: H04M 3/42, H04M 7/00

(54) **Verfahren um beispielsweise mittels einer Bildsuchmaschine eine Verbindung aufzubauen**

(30) Priorität: 23.10.2008 DE 102008052948
(71) Anmelder: Vodafone Holding GmbH, 40213 Düsseldorf (DE)
(72) Erfinder: Hertle, Dr. Jochen, 85521, Ottobrunn (DE)
(74) Vertreter: Müller & Schubert

(57) **Zusammenfassung**

Die vorliegende Anmeldung betrifft unter anderem ein Verfahren zum Herstellen einer Kommunikation zwischen verschiedenen Teilnehmern (3, 5) in wenigstens einem Kommunikationsnetzwerk mittels einer Vermittlungseinrichtung (1). Beispielsweise wird ein bestimmter Gegenstand vom ersten Teilnehmer (3) fotografiert und die Fotografie an einen Dienste-Rechner (4) übertragen. Eine bildbasierte Suchmaschine vergleicht das eingesendete Bild mit allen Bildern einer Referenzdatenbank. Findet sich das passende Bild, so löst die Suchmaschine die Suchmaschine ein Kommunikationsereignis aus indem sie beispielsweise einen Anruf zu einem zweiten Teilnehmer aufbaut oder diesem eine Email sendet. Diesbezüglich greift die Suchmaschine mittels einer beispielsweise durch Bilder indizierte Profildatei zu und entnimmt dieser eine Verbindungskennung und gegebenenfalls eine vordefinierte Nachricht. Bei der Verbindungskennung handelt es sich beispielsweise um eine Telefonnummer oder eine Email-Adresse. Die vordefinierte Nachricht lautet beispielsweise "Alles Gute zum Geburtstag". Das beanspruchte Verfahren ist allerdings weder auf bildbasierte Suchmaschinen noch auf bestimmte Verbindungen beschränkt. Der Grundgedanke liegt darin, dass ein Teilnehmer einen Dienst in einem Kommunikationsnetz nutzt ohne notwendigerweise eine Verbindung zu einem anderen Teilnehmer aufbauen zu wollen. Dieser Dienst löst dann jedoch, eventuell unwissentlich, einen Verbinctungsaufbau zu einem weiteren Teilnehmer aus.

## Beschreibung

Die vorliegende Erfindung betrifft zunächst ein Verfahren zur Kommunikation zwischen elektronischen Endgeräten in wenigstens einem Kommunikationsnetzwerk mittels einer Vermittlungseinrichtung. Weiterhin betrifft die Erfindung auch eine Vermittlungseinrichtung zum Herstellen einer Kommunikation zwischen elektronischen Endgeräten in wenigstens einem Kommunikationsnetzwerk.

Lösungen zur Herstellung einer Kommunikation zwischen verschiedenen Teilnehmern in Kommunikationsnetzen sind im Stand der Technik bereits auf unterschiedlichste Weise bekannt. Insbesondere mit der Einführung und Etablierung von Telekommunikationsnetzen in Form von Mobilfunknetzen haben sich für die Teilnehmer solcher Kommunikationsnetze ungeahnte Möglichkeiten der Kommunikation ergeben.

Traditionell wird zwischen zwei Teilnehmern A und B dadurch vermittelt, dass Teilnehmer A die Rufnummer oder Teilnehmerkennung von Teilnehmer B zu Beginn der Kommunikation an ein zentrales Vermittlungssystem übermittelt, so dass daraufhin die Verbindung zwischen den Teilnehmern hergestellt, beziehungsweise eine Nachricht von Teilnehmer A an Teilnehmer B übertragen wird. Dabei kann die Teilnehmerkennung von Teilnehmer B bereits in einem zentralen System hinterlegt sein und Teilnehmer A initiiert die Kommunikation durch einen so genannten Short-Code, der auf die hinterlegte Kennung von Teilnehmer B lediglich verweist.

Im Stand der Technik sind beispielsweise auch Lösungen bekannt, bei denen eine Kommunikation mittels einer Vermittlungseinrichtung initiiert wird, beispielsweise, wenn eine bestimmte Situation eintritt. In der DE 603 07 014 T2 ist beispielsweise eine Lösung beschrieben, bei der Bilder erzeugt, an eine Rechnereinheit übertragen und in dieser analysiert werden, wobei hierzu ein Vergleich mit Referenzwerten erfolgt. Bei Auftreten bestimmter Ergebnisse wird der die Anfrage auslösende Nutzer informiert. Dies kann beispielsweise mittels Telefon, per E-Mail oder dergleichen erfolgen.

Bei einer anderen Lösung gemäß DE 102 14 658 A1 geht es wieder darum, dass mit einer Kamera ein Bild erzeugt und an eine zentrale Rechnereinheit übertragen wird. In der Rechnereinheit wird das Bild analysiert und mit Referenzbildern verglichen. Die gefundenen Ergebnisse werden in der Rechnereinheit beurteilt. Die Beurteilungsergebnisse werden anschließend an die Kamera zurück übertragen. Zusätzlich kann die Rechnereinheit nach der Beurteilung gegebenenfalls auch eine Verbindung zum Internet herstellen, über die die Beurteilungsergebnisse einem Internet-Suchprogramm zugeführt werden.

Im Stand der Technik sind aber auch bereits Lösungen bekannt geworden, bei denen ein erster Teilnehmer A eine Verbindung zu einem - möglicherweise noch nicht bekannten - zweiten Teilnehmer B aufbauen will. Dazu ist eine Vermittlungseinrichtung vorgesehen, die eine solche Vorgehensweise auf Basis von Profilen leistet. Eine diesbezügliche Lösung ist beispielsweise in der DE 198 35 092 C2 offenbart. Darin geht es um ein computergesteuertes Partnervermittlungssystem. Ein Teilnehmer gibt über ein ihm zugeordnetes elektronisches Endgerät eine Nachricht, eine Suchanfrage oder dergleichen ein, die an eine Rechnereinheit übertragen wird. Dort findet dann ein Vergleich der Suchanfrage mit Referenzinformationen statt. Wenn eine Übereinstimmung gefunden wurde, wird die "gematchte" Person, die zu der Referenzinformation gehört, automatisch durch Senden einer Nachricht informiert.

Nachteilig bei dem genannten Stand der Technik ist jedoch, dass immer die Situation vorherrschen muss, dass der erste Teilnehmer A eine Kommunikation zu einem zweiten Teilnehmer B aufbauen will.

Der vorliegenden Erfindung liegt deshalb die Aufgabe zugrunde, ein Verfahren der eingangs genannten Art bereitzustellen, mittels dessen eine Kommunikation zwischen elektronischen Endgeräten, und damit zwischen verschiedenen Teilnehmern abhängig von definierten Informationen, so genannten Events ausgelöst wird, ohne dass es in der Absicht eines ersten Teilnehmers A gelegen haben muss, eine Kommunikation zu einem zweiten Teilnehmer B herzustellen.

Diese Aufgabe wird erfindungsgemäß gelöst durch das Verfahren mit den Merkmalen gemäß dem unabhängigen Patentanspruch 1 sowie die Vermittlungseinrichtung mit den Merkmalen gemäß dem unabhängigen Patentanspruch 7. Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vermittlungseinrichtung, und umgekehrt, so dass bezüglich der Offenbarung eines der Erfindungsaspekte stets wechselseitig auch auf die Offenbarung zum jeweils anderen Erfindungsaspekt vollinhaltlich Bezug genommen und verwiesen wird.

Die vorliegende Erfindung basiert auf dem Grundgedanken, dass der erste Teilnehmer A eben nicht eine Verbindung zu einem zweiten Teilnehmer B schaffen will, sondern eigentlich einen anderen Dienst in einem Kommunikationsnetz nutzt und die Vermittlungseinrichtung, durch diesen Dienst getriggert, entweder eine Nachricht an einen zweiten Teilnehmer B sendet, oder optional auch eine Verbindung zwischen den Teilnehmern A und B aufbaut.

Gemäß dem ersten Aspekt der Erfindung wird ein Verfahren zur Kommunikation zwischen elektronischen Endgeräten in wenigstens einem Kommunikationsnetzwerk mittels einer Vermittlungseinrichtung bereitgestellt, das gekennzeichnet ist durch folgende Schritte: von einem ersten elektronischen Endgerät wird eine Information zu einer Rechnereinheit übertragen; die Rechnereinheit steht über eine Datenschnittstelle mit der Vermittlungseinrichtung zur Übertragung von Informationen in Verbindung, wobei in der Rechnereinheit oder in der Vermittlungseinrichtung eine Überprüfung stattfindet, ob es sich bei einer vom ersten elektronischen Endgerät übertragenen Information um eine vordefinierte Informationen handelt, die in wenigstens einer der Vermittlungseinrichtung zugeordneten Profildatei abgelegt ist; in der wenigstens einen Profildatei ist jeder vordefinierten Information wenigstens eine Verbindungskennung zu zumindest einem zweiten elektronischen Endgerät sowie wenigstens eine vordefinierte Nachricht zugeordnet, und bei Feststellung, dass es sich bei der Information um eine vordefinierte Information handelt, wird von der Vermittlungseinrichtung die der vordefinierten Information zugeordnete Verbindungskennung zum Aufbau einer Verbindung zu dem zumindest einen zweiten elektronischen Endgerät aktiviert und die vordefinierte Nachricht ausgeführt.

Auf die eingangs geschilderte Situation bezogen, bei der der erste Teilnehmer A eben nicht eine Verbindung zu einem zweiten Teilnehmer B schaffen will, sondern eigentlich einen anderen Dienst in einem Kommunikationsnetz nutzt, kann gemäß einer weiteren Ausgestaltung ein Verfahren zum Herstellen einer Kommunikation zwischen verschiedenen Teilnehmern in Kommunikationsnetzwerken mittels einer eventbasierten Vermittlungseinrichtung bereitgestellt werden, das gekennzeichnet ist durch folgende Schritte: ein erster Teilnehmer nutzt über ein ihm zugeordnetes elektronisches Endgerät einen Dienst in einem Kommunikationsnetz, wobei Informationen von dem elektronischen Endgerät des ersten Teilnehmers zu einer dem Dienst zugeordneten Rechnereinheit übertragen werden; die dem Dienst zugeordnete Rechnereinheit steht über eine Datenschnittstelle mit der eventbasierten Vermittlungseinrichtung zur Übertragung von Informationen in Verbindung, wobei in der Rechnereinheit oder in der eventbasierten Vermittlungseinrichtung eine Überprüfung stattfindet, ob es sich bei den vom elektronischen Endgerät des ersten Teilnehmers übertragenen Informationen um ein Event handelt, wobei ein Event eine vordefinierte Information darstellt, die in wenigstens einer der eventbasierten Vermittlungseinrichtung zugeordneten Profildatei abgelegt ist; in der wenigstens einen Profildatei ist jedem Event wenigstens eine Verbindungskennung zu zumindest einem elektronischen Endgerät wenigstens eines zweiten Teilnehmers sowie wenigstens eine vordefinierte Nachricht zugeordnet, und bei Feststellung, dass es sich bei der Informationen um ein Event handelt, wird von der eventbasierten Vermittlungseinrichtung die dem Event zugeordnete Verbindungskennung zum Aufbau einer Verbindung zu dem zumindest einen elektronischen Endgerät des wenigstens einen zweiten Teilnehmers aktiviert und die vordefinierte Nachricht ausgeführt.

Das erfindungsgemäße Verfahren beschreibt somit eine neuartige Möglichkeit zur Kommunikation zwischen elektronischen Endgeräten, etwa einem ersten elektronischen Endgerät und wenigstens einem zweiten elektronischen Endgerät, beziehungsweise zwischen zwei Teilnehmern A und B in wenigstens einem Kommunikationsnetz, beispielsweise einem Telekommunikationsnetzwerk.

Im Unterschied zu den im Stand der Technik bekannten traditionellen Lösungen wird gemäß der vorliegenden Erfindung eine Vermittlungseinrichtung, insbesondere eine eventbasierte Vermittlungseinrichtung, vorgeschlagen, die eine Verbindung zu wenigstens einem zweiten elektronischen Endgerät, beziehungsweise zu zweiten Teilnehmern B aufbaut, oder eine Nachricht an diese Endgeräte beziehungsweise Teilnehmer B übermittelt, und zwar abhängig von definierten Informationen, so genannten Events. Die Events werden beispielsweise ausgelöst durch Interaktion des ersten Teilnehmers A über ein ihm zugeordnetes erstes elektronisches Endgerät mit einem Dienst in einem Kommunikationsnetz, beziehungsweise durch Interaktion eines ersten elektronischen Endgeräts mit einer Rechnereinheit, die einem solchen Dienst zugeordnet ist.

Beispielsweise könnte sich bei einem solchen Dienst um einen Dienst zur bildbasierten Suche handeln. Ein solches Beispiel wird im weiteren Verlauf der Beschreibung noch in größerem Detail erläutert, ohne dass die Erfindung auf dieses Beispiel, oder aber auf einen bestimmten Dienst beschränkt wäre. Eine Lösung gemäß der vorliegenden Erfindung ist insbesondere dann interessant, wenn der erste Teilnehmer A auf Dienste über das Telekommunikationsnetz zugreift und die entsprechenden Events durch diese spezielle Dienstenutzung ausgelöst werden. Der erste Teilnehmer A muss also gar nicht die Absicht haben, einem zweiten Teilnehmer B eine Nachricht zukommen zu lassen. Dies geschieht vielmehr als eine Art Zusatzeffekt einer anderen Dienstenutzung des ersten Teilnehmers A.

Die vorliegende Erfindung besteht neben dem Verfahren auch in der Ausgestaltung einer, insbesondere eventbasierten, Vermittlungseinrichtung, insbesondere hinsichtlich der folgenden Aspekte: Definieren der Verbindungen durch Konfiguration der Vermittlungseinrichtung; Definieren von Events, ausgelöst durch Nutzung von Diensten, bei denen definierte Verbindungen aktiviert werden sollen; Definieren von Nachrichten, die bei Eintreten eines Events über die definierten Verbindungen übertragen werden sollen; Mechanismen zur Ermittlung der Adresskennung des ersten Teilnehmers A, der durch die Dienstenutzung das Event ausgelöst hat; Ausgestaltung der eventbasierten Vermittlungseinrichtung. Wie dies im Detail realisiert werden kann, wird im Folgenden näher erläutert.

Gemäß dem ersten Aspekt der Erfindung wird ein Verfahren zum Herstellen einer Kommunikation zwischen elektronischen Endgeräten beziehungsweise zwischen verschiedenen Teilnehmern in wenigstens einem Kommunikationsnetzwerk mittels einer, insbesondere eventbasierten, Vermittlungseinrichtung bereitgestellt. Dabei können die elektronischen Endgeräte beziehungsweise die Teilnehmer in einem einzigen Kommunikationsnetz, beispielsweise einem Telekommunikationsnetz, etwa einem Mobilfunknetz, registriert und aktiv sein. Natürlich ist auch denkbar, dass die elektronischen Endgeräte beziehungsweise Teilnehmer in unterschiedlichen Kommunikationsnetzen registriert und aktiv sind, wobei die Vermittlungseinrichtung dann eine Art Schnittstelle zwischen den unterschiedlichen Kommunikationsnetzen bildet.

Ein zentraler Bestandteil der vorliegenden Erfindung sind die so genannten Events, bei denen es sich um bestimmte, vordefinierte Ereignisse handelt. Gemäß der vorliegenden Erfindung stellt ein Event eine vordefinierte Information dar. Im Zusammenhang mit der bildbasierten Suche etwa kann es sich bei einem Event um ein erzeugtes Bild handeln.

Die Events sind in wenigstens einer der Vermittlungseinrichtung zugeordneten Profildatei abgelegt. Bei der Profildatei kann es sich beispielsweise um eine Art Tabelle oder dergleichen handeln. Die Profildatei kann Bestandteil der Vermittlungseinrichtung sein. Natürlich kann die Profildatei auch in einem zur Vermittlungseinrichtung unabhängigen Datenspeicher abgelegt sein, wobei die Vermittlungseinrichtung dann auf den Datenspeicher zugreift.

In der wenigstens einen Profildatei ist jedem Event wenigstens eine Verbindungskennung zu zumindest einem zweiten elektronischen Endgerät, das wenigstens einem zweiten Teilnehmer B zugeordnet ist, sowie wenigstens eine vordefinierte Nachricht zugeordnet.

Das erfindungsgemäße Verfahren sowie die erfindungsgemäße Vermittlungseinrichtung sollen vorteilhaft derart ausgestaltet sein, dass es ermöglicht wird, Verbindungen zu zweiten elektronischen Endgeräten beziehungsweise zweiten Teilnehmern B vorab zu definieren/konfigurieren. Vorteilhaft kann dazu vorgesehen sein, dass die wenigstens eine Profildatei in einem Datenspeicher abgelegt ist, dass der Datenspeicher eine Schnittstelle zu wenigstens einer externen Eingabeeinrichtung aufweist und dass die in wenigstens einer Profildatei abgelegten Daten über die wenigstens eine externe Eingabeeinrichtung erzeugt und/oder bearbeitet werden oder werden können.

Vorteilhaft kann über eine Nutzereingabe, beispielsweise über das Internet, über ein Endgerät in Form eines Mobilfunktelefons oder dergleichen, unter Angabe der Teilnehmerkennung eines zweiten Teilnehmers B eine Verbindung von der, insbesondere eventbasierten, Vermittlungseinrichtung zu dem elektronischen Endgerät des zweiten Teilnehmers definiert werden. Diese Verbindung bekommt, insbesondere von der Vermittlungseinrichtung, eine Referenz, z.B. V001, zugeordnet. Optional soll es möglich sein, auch Verbindungen mit mehreren Teilnehmern in analoger Weise zu definieren.

Die Art der Verbindung kann in diesem Schritt schon die möglichen Nachrichten einschränken. Beispielsweise wird durch eine Teilnehmerkennung = user@dienst.com bereits festgelegt, dass eine Email übertragen werden soll. Durch eine Angabe = +49172555666 wird eine Telefonverbindung festgelegt, über die beispielsweise Audiodaten oder Videodaten übertragen werden können. Eine mögliche Ausgestaltung ist es, die Verbindung als eine Verbindung zwischen dem auslösenden ersten Teilnehmer A und dem Empfänger in Form des zweiten Teilnehmers B festzulegen. In diesem Fall muss die Vermittlungseinrichtung noch in der Lage sein, die Teilnehmerkennung des ersten Teilnehmers A in Erfahrung zu bringen und zusätzlich eine Verbindung von der eventbasierten Vermittlungseinrichtung zum elektronischen Endgerät des ersten Teilnehmers A zu aufzubauen. Wie dies im Einzelnen geschehen kann, wird weiter unten noch näher erläutert.

Die Vermittlungseinrichtung soll vorteilhaft in der Lage sein, unterschiedliche Events von allgemeinen Telekommunikationsdiensten entgegen zu nehmen. Teilnehmer oder Administratoren des Systems können über eine Nutzereingabe neue Events anlegen. Jedes Event erhält, insbesondere von der Vermittlungseinrichtung, eine Referenz, z.B. E001, E002, usw.

Damit diese Events wirksam werden können, kann gemäß einer vorteilhaften Ausführung der Erfindung an den anderen Systemen, die Events auslösen sollen, etwa dem Dienst, dieses Event auch bekannt gemacht werden und es muss eine Verbindung zwischen dem Event auslösenden System und der eventbasierten Vermittlungseinrichtung bestehen.

In einem weiteren Schritt werden die Nachrichten und/oder die Art von deren Übermittlung, etwa in Form von Text, Sprache, Email, Video, und dergleichen, definiert. Eine Textnachricht könnte beispielsweise in der Form N001="Alles Gute zum Geburtstag" hinterlegt werden. Ein Sprachanruf kann zum Beispiel einfach durch N002=Sprachanruf definiert werden. In diesem Fall würde eine Telefonverbindung als Ergebnis der eventbasierten Vermittlung aufgebaut werden.

Über die weiter oben beschriebene Nutzereingabe können beispielsweise die zuvor definierten Events in der Profildatei mit den definierten Nachrichten und Verbindungen verknüpft werden. Dies kann zum Beispiel in Form einer Tabelle geschehen.

Die Einträge zu Verbindung oder Nachricht können optional mehrere Einträge aufweisen. In diesem Fall werden entsprechend bei Eintreten eines Events mehrere Verbindungen aufgebaut, beziehungsweise mehrere Nachrichten übermittelt.

Optional kann man Teilnehmer auch zu Gruppen zusammenfassen und für alle Teilnehmer einer Gruppe eine solche Profildatei definieren. Auch Kombinationen aus allgemeingültigen Profildateien und individuellen Profildateien sind möglich.

Wenn die Profildateien eingerichtet sind, ist der Ablauf des Verfahrens beispielsweise wie folgt:

Ein erster Teilnehmer nutzt über ein ihm zugeordnetes elektronisches Endgerät einen Dienst in einem Kommunikationsnetz, wobei Informationen von dem elektronischen Endgerät des ersten Teilnehmers zu einer dem Dienst zugeordneten Rechnereinheit übertragen werden. Beispielsweise könnte es sich bei dem Dienst um die Möglichkeit einer bildbasierten Suche handeln. In diesem Fall erzeugt der erste Teilnehmer über das ihm zugeordnete elektronische Endgerät ein Bild, bei dem es sich dann um die Information handelt. Dieses Bild wird zu Ausführung des Dienstes an die dem Dienst zugeordnete Rechnereinheit übertragen.

Die dem Dienst zugeordnete Rechnereinheit steht über eine Datenschnittstelle mit der eventbasierten Vermittlungseinrichtung in Verbindung. Auf diese Weise können Informationen zwischen der Rechnereinheit des Dienstes und der eventbasierten Vermittlungseinrichtung übertragen werden.

Der genutzte Dienst, beispielsweise eine Telekommunikationsdienst, kann beispielsweise entweder innerhalb des Kommunikationsnetzes des ersten Teilnehmers A sein, oder aber extern, beispielsweise ein Internet basierter Dienst.

Je nach Ausgestaltung des Verfahrens kann in der dem Dienst zugeordneten Rechnereinheit und/oder in der eventbasierten Vermittlungseinrichtung eine Überprüfung stattfinden, ob es sich bei den vom elektronischen Endgerät des ersten Teilnehmers übertragenen Informationen um ein Event handelt.

Gemäß einer bevorzugten Ausführungsform der Erfindung kann in der Rechnereinheit die Überprüfung stattfinden, ob es sich bei der vom ersten elektronischen Endgerät übertragenen Information um eine vordefinierte Information handelt. Dazu werden die in wenigstens einer Profildatei abgelegten vordefinierten Informationen von der Vermittlungseinrichtung über die Datenschnittstelle zu der Rechnereinheit übertragen. Dann werden in der Rechnereinheit die von dem ersten elektronischen Endgerät übertragene Information mit den von der Vermittlungseinrichtung übertragenen vordefinierten Informationen verglichen. Bei Feststellung einer Übereinstimmung wird eine entsprechende Information als vordefinierte Information über die Datenschnittstelle von der Rechnereinheit an die Vermittlungseinrichtung übertragen. Die entsprechende Information wird von der Vermittlungseinrichtung mit den in der wenigstens einen Profildatei abgelegten vordefinierten Informationen verglichen. Bei Feststellung einer Übereinstimmung wird von der Vermittlungseinrichtung die der entsprechenden vordefinierten Information in der wenigstens einen Profildatei zugeordnete Verbindungskennung zum Aufbau einer Verbindung zu dem zumindest einen zweiten elektronischen Endgerät aktiviert und die vordefinierte Nachricht wird ausgeführt.

Im Hinblick auf die Situation, dass eine Kommunikation zwischen einem Teilnehmer A und einem Teilnehmer B hergestellt werden soll, kann gemäß einer weiteren Ausgestaltung vorgesehen sein, dass in der dem Dienst zugeordneten Rechnereinheit die Überprüfung stattfinden kann, ob es sich bei den vom elektronischen Endgerät des ersten Teilnehmers A übertragenen Informationen um ein Event handelt. Dazu werden die in wenigstens einer Profildatei abgelegten Events von der eventbasierten Vermittlungseinrichtung über die Datenschnittstelle zu der dem Dienst zugeordneten Rechnereinheit übertragen. Dann werden in der Rechnereinheit die von dem elektronischen Endgerät übertragenen Informationen mit den von der eventbasierten Vermittlungseinrichtung übertragenen Events verglichen. Bei Feststellung einer Übereinstimmung wird dann eine entsprechende Information als Event über die Datenschnittstelle von der Rechnereinheit an die eventbasierte Vermittlungseinrichtung übertragen. Die entsprechende Information wird von der eventbasierten Vermittlungseinrichtung mit den in der wenigstens einen Profildatei abgelegten Events verglichen. Bei Feststellung einer Übereinstimmung wird von der eventbasierten Vermittlungseinrichtung die dem entsprechenden Event in der wenigstens einen Profildatei zugeordnete Verbindungskennung zum Aufbau einer Verbindung zu dem zumindest einen elektronischen Endgerät des wenigstens einen zweiten Teilnehmers B aktiviert und die vordefinierte Nachricht ausgeführt. Gemäß dieser Ausführungsvariante des Verfahrens nutzt ein erster Teilnehmer A einen Dienst, der ein vordefiniertes Event E00x auslöst und dieses Event wird an die eventbasierte Vermittlungseinrichtung übermittelt.

Gemäß einer weiteren Ausführungsform, die alternativ oder zusätzlich realisiert werden kann, findet in der eventbasierten Vermittlungseinrichtung die Überprüfung statt, ob es sich bei einer vom ersten elektronischen Endgerät übertragenen Information um eine vordefinierte Information handelt. Dazu werden die vom ersten elektronischen Endgerät an die Rechnereinheit übertragene Information über die Datenschnittstelle an die Vermittlungseinrichtung übertragen. In der Vermittlungseinrichtung werden die von der Rechnereinheit übertragenen Informationen mit den in wenigstens einer Profildatei abgelegten vordefinierten Informationen verglichen. Bei Feststellung einer Übereinstimmung wird von der Vermittlungseinrichtung die der vordefinierten Information in der wenigstens einen Profildatei zugeordnete Verbindungskennung zum Aufbau einer Verbindung zu dem zumindest einen zweiten elektronischen Endgerät aktiviert und die vordefinierte Nachricht wird ausgeführt.

Im Hinblick auf die Situation, dass eine Kommunikation zwischen einem Teilnehmer A und einem Teilnehmer B hergestellt werden soll, kann gemäß einer weiteren Ausgestaltung vorgesehen sein, dass in der eventbasierten Vermittlungseinrichtung die Überprüfung stattfindet, ob es sich bei den vom elektronischen Endgerät des ersten Teilnehmers A übertragenen Informationen um ein Event handelt. Dazu werden die vom elektronischen Endgerät des ersten Teilnehmers A an die dem Dienst zugeordnete Rechnereinheit übertragenen Informationen über die Datenschnittstelle an die eventbasierte Vermittlungseinrichtung übertragen. In der eventbasierten Vermittlungseinrichtung werden die von der Rechnereinheit übertragenen Informationen mit den in wenigstens einer Profildatei abgelegten Events verglichen. Bei Feststellung einer Übereinstimmung wird von der eventbasierten Vermittlungseinrichtung die dem Event in der wenigstens einen Profildatei zugeordnete Verbindungskennung zum Aufbau einer Verbindung zu dem zumindest einen elektronischen Endgerät des wenigstens einen zweiten Teilnehmers B aktiviert und die vordefinierte Nachricht ausgeführt.

Wird bei Ablauf des Verfahrens nun festgestellt, dass es sich bei der Informationen um eine vordefinierte Information, das heißt ein Event, handelt, wird von der Vermittlungseinrichtung die der vordefinierten Information zugeordnete Verbindungskennung zum Aufbau einer Verbindung zu dem zumindest einen zweiten elektronischen Endgerät, des wenigstens einen zweiten Teilnehmers B aktiviert und die vordefinierte Nachricht ausgeführt. Anders ausgedrückt, die Vermittlungseinrichtung schaut in der Profildatei nach, ob für ein bestimmtes Event ein Eintrag vorliegt. Falls ja, wird die zugeordnete Verbindung aufgebaut und die dazugehörige Nachricht ausgeführt.

Dabei kann die Ausführung der Nachricht auf unterschiedliche Weise erfolgen. Nachfolgend werden hierzu einige vorteilhafte, jedoch nicht ausschließliche Beispiele beschrieben.

Beispielsweise kann das Ausführen einer Nachricht bedeuten, dass bestimmte Informationen übertragen werden. Vorteilhaft kann in einem solchen Fall vorgesehen sein, dass nach Aktivierung der Verbindung zu dem zumindest einen zweiten elektronischen Endgerät, etwa des wenigstens einen zweiten Teilnehmers B, die vordefinierte Nachricht derart ausgeführt wird, dass eine der Nachricht zugeordnete Information an das zweite elektronische Endgerät, etwa des wenigstens einen zweiten Teilnehmers B, übertragen wird.

Beispielsweise kann das Ausführen einer Nachricht auch bedeuten, dass eine Verbindung zwischen dem ersten elektronischen Endgerät und wenigstens einem zweiten elektronischen Endgerät, beziehungsweise zwischen dem ersten Teilnehmer A und einem zweiten Teilnehmer B, hergestellt wird. Vorteilhaft kann in einem solchen Fall vorgesehen sein, dass nach Aktivierung der Verbindung zu dem zumindest einen zweiten elektronischen Endgerät, beispielsweise des wenigstens einen zweiten Teilnehmers B, die vordefinierte Nachricht derart ausgeführt wird, dass die Vermittlungseinrichtung eine Adresskennung des ersten elektronischen Endgeräts, beispielsweise des ersten Teilnehmers A, ermittelt und dass eine Kommunikationsverbindung zwischen dem ersten elektronischen Endgerät, etwa des ersten Teilnehmers A, und wenigstens einem zweiten elektronischen Endgerät, beispielsweise wenigstens eines zweiten Teilnehmers B, hergestellt wird. Ist die Nachricht dergestalt definiert worden, dass eine Verbindung zwischen den ersten und zweiten elektronischen Endgeräten, beziehungsweise zwischen den Teilnehmern A und B, aufgebaut werden soll, so muss die Vermittlungseinrichtung noch die Teilnehmerkennung des ersten elektronischen Endgeräts beziehungsweise Teilnehmers A erfahren. Das wird vorzugsweise so realisiert, dass die Vermittlungseinrichtung bei einem zentralen Systemelement anfragt, wer den Dienst gerade nutzt beziehungsweise genutzt hat. Das Systemelement übermittelt die Teilnehmerkennung des ersten elektronischen Endgeräts beziehungsweise Teilnehmers A an die Vermittlungseinrichtung. Dadurch kann die Vermittlungseinrichtung die geforderte Verbindung zwischen den elektronischen Endgeräten beziehungsweise den Teilnehmern A und B herstellen. Gemäß einer anderen Ausgestaltung ist es auch möglich, dass der Dienst die Teilnehmerkennung des ersten elektronischen Endgeräts beziehungsweise Teilnehmers innerhalb der übertragenen Information, etwa innerhalb eines übertragenen Events, an die Vermittlungseinrichtung gleich mit übermittelt.

Gemäß einem zweiten Aspekt der Erfindung wird eine Vermittlungseinrichtung zum Herstellen einer Kommunikation zwischen elektronischen Endgeräten in zumindest einem Kommunikationsnetzwerk bereitgestellt, aufweisend eine Datenschnittstelle zu einer Rechnereinheit in einem Kommunikationsnetz zur Übertragung von Informationen zwischen der Rechnereinheit und der Vermittlungseinrichtung, wenigstens eine der Vermittlungseinrichtung zugeordnete Profildatei, aufweisend eine Anzahl von vordefinierten Informationen, wobei jeder vordefinierten Information wenigstens eine Verbindungskennung zu zumindest einem zweiten elektronischen Endgerät sowie wenigstens eine vordefinierte Nachricht zugeordnet ist, weiterhin aufweisend eine Vergleichseinrichtung zum Vergleichen von auf die Vermittlungseinrichtung übertragenen Informationen mit in wenigstens einer Profildatei abgelegten vordefinierten Informationen, wenigstens eine Schnittstelle zu wenigstens einem zweiten elektronischen Endgerät, sowie eine Aktivierungseinrichtung, die dazu ausgebildet ist, dass bei Feststellung, dass es sich bei einer auf die Vermittlungseinrichtung übertragenen Information um eine vordefinierte Information handelt, von der Vermittlungseinrichtung die der vordefinierten zugeordnete Verbindungskennung zum Aufbau einer Verbindung zu dem zumindest einen zweiten elektronischen Endgerät aktivierbar und die vordefinierte Nachricht ausführbar ist.

Im Hinblick auf die Situation, dass eine Kommunikation zwischen einem Teilnehmer A und einem Teilnehmer B hergestellt werden soll, kann gemäß einer weiteren Ausgestaltung eine eventbasierte Vermittlungseinrichtung zum Herstellen einer Kommunikation zwischen verschiedenen Teilnehmern in Kommunikationsnetzwerken bereitgestellt werden, aufweisend eine Datenschnittstelle zu einem Dienst in einem Kommunikationsnetz zur Übertragung von Informationen zwischen einer dem Dienst zugeordneten Rechnereinheit und der eventbasierten Vermittlungseinrichtung, wenigstens eine der eventbasierten Vermittlungseinrichtung zugeordnete Profildatei, aufweisend eine Anzahl von Events, wobei jedem Event wenigstens eine Verbindungskennung zu zumindest einem elektronischen Endgerät wenigstens eines zweiten Teilnehmers sowie wenigstens eine vordefinierte Nachricht zugeordnet ist, weiterhin aufweisend eine Vergleichseinrichtung zum Vergleichen von auf die eventbasierte Vermittlungseinrichtung übertragenen Informationen mit in wenigstens einer Profildatei abgelegten Events, wenigstens eine Schnittstelle zu wenigstens einem elektronischen Endgerät wenigstens eines zweiten Teilnehmers, sowie eine Aktivierungseinrichtung, die dazu ausgebildet ist, dass bei Feststellung, dass es sich bei den auf die eventbasierte Vermittlungseinrichtung übertragenen Informationen um ein Event handelt, von der eventbasierten Vermittlungseinrichtung die dem Event zugeordnete Verbindungskennung zum Aufbau einer Verbindung zu dem zumindest einen elektronischen Endgerät des wenigstens einen zweiten Teilnehmers aktivierbar und die vordefinierte Nachricht ausführbar ist.

Vorteilhaft weist die Vermittlungseinrichtung Mittel zur Durchführung des wie vorstehend beschriebenen erfindungsgemäßen Verfahrens auf, so dass alles bezüglich des Verfahrens Gesagte auch im Zusammenhang mit der erfindungsgemäßen Vermittlungseinrichtung gilt.

Die vorliegende Erfindung kann im Zusammenhang mit unterschiedlichsten Diensten zum Einsatz kommen. Gemäß einer vorteilhaften Anwendung kann die vorliegende Erfindung im Zusammenhang mit der bildbasierten Suche zum Einsatz kommen. Der Kern dieses Ausführungsbeispiels besteht darin, dass ein Kommunikationsereignis wie beispielsweise die Zustellung einer Nachricht oder ein Anruf ausgelöst wird durch ein Ergebnis der bildbasierten Suche. Ein erster Teilnehmer A macht beispielsweise eine Suchanfrage dadurch, dass er einen Gegenstand oder ein Gebäude mit seinem Mobiltelefon fotografiert und dieses Bild an die Suchmaschine, bei der es sich dann um den weiter oben genannten Dienst handelt, zum Beispiel per MMS übermittelt. Die bildbasierte Suchmaschine vergleicht das eingesendete Bild mit allen Bildern in einer Referenzdatenbank und findet in diesem Beispiel das passende Bild. Nun können zwei Dinge passieren: erstens gibt die Suchmaschine die passende Antwort an den Teilnehmer A zurück. Und zweitens löst die Suchmaschine ein Kommunikationsereignis aus indem sie beispielsweise eine SMS, eine MMS, einen Anruf, eine Email und dergleichen an einen zweiten Teilnehmer B sendet. Der Inhalt dieser zweiten Nachricht kann vordefiniert sein, oder sich aber aus dem Kontext der Suchanfrage ergeben. Der Kontakt kann wiederum dadurch entstehen, dass die Profildateien der Teilnehmer A und B im System hinterlegt sind und es einen entsprechenden 'Match' gibt, beispielsweise, weil beide Teilnehmer der gleichen Gruppe angehören, oder einfach aus Ort und Zeit. Der Teilnehmer B erfährt auf diese Weise davon, dass ein bestimmter Gegenstand fotografiert wurde und eine Suchanfrage dazu gestartet wurde. Teilnehmer A kann auf diese Weise bewusst oder unbewusst eine Nachricht an Teilnehmer B senden, ohne ihn/sie kennen zu müssen. Teilnehmer B kann auf Basis dieser Nachricht Teilnehmer A

Die Erfindung wird nun anhand eines Ausführungsbeispiels unter Bezugnahme auf die beiliegenden Zeichnungen näher erläutert. Es zeigen
- Figur 1: eine schematische Darstellung eines eventbasierten Vermittlungssystems mit einer erfindungsgemäßen eventbasierten Vermittlungseinrichtung, auf der das erfindungsgemäße Verfahren ablaufen kann; und
- Figur 2: eine dazu benötigte Profildatei.

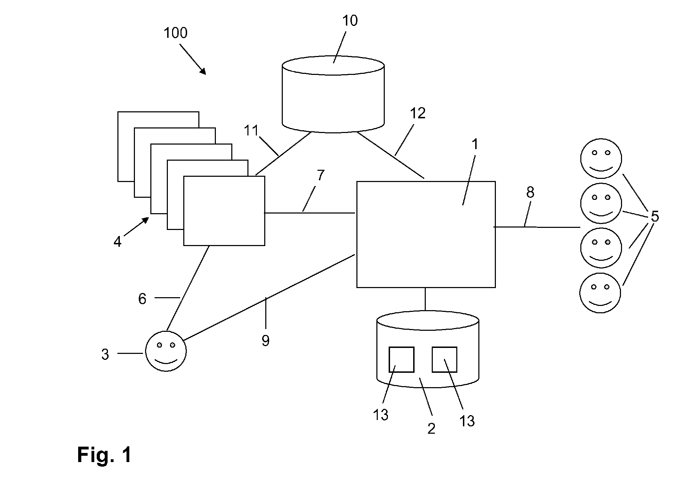

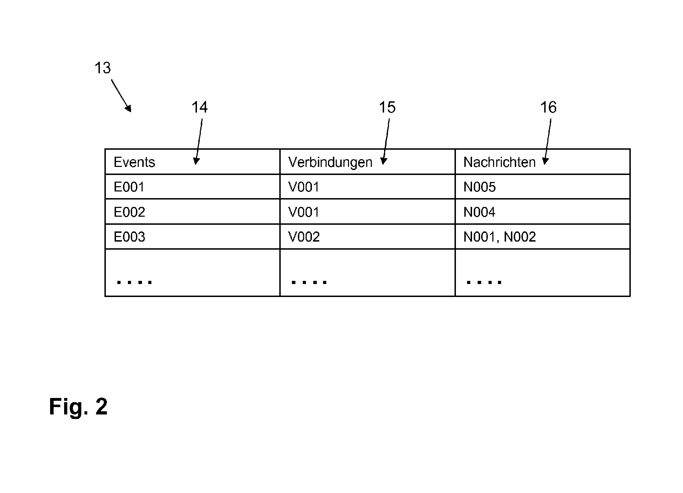

Gemäß dem in den Figuren 1 und 2 dargestellten Ausführungsbeispiel wird ein eventbasiertes Vermittlungssystem 100 vorgeschlagen, das eine Verbindung zu zweiten Teilnehmern 5, beziehungsweise zu elektronischen Endgeräten, die diesen Teilnehmern zugeordnet sind, aufbaut oder Nachrichten an die zweiten Teilnehmer 5 übermittelt, und zwar abhängig von definierten Ereignissen, ausgelöst durch Interaktion eines ersten Teilnehmers 3 mit einem Dienst 4. Diese Möglichkeit ist insbesondere dann interessant, wenn der erste Teilnehmer 3 auf Dienste 4 über das Telekommunikationsnetz zugreift und diese Events durch diese spezielle Dienstenutzung ausgelöst werden. Der erste Teilnehmer 3 muss also gar nicht die Absicht haben, dem zweiten Teilnehmer 5 eine Nachricht zukommen zu lassen, sondern dies geschieht eher als ,Nebeneffekt' einer anderen Dienstenutzung von Teilnehmer 3.

Das Vermittlungssystem 100 soll derart ausgestaltet sein, dass es ermöglicht wird, Verbindungen zu zweiten Teilnehmern 5 vorab zu definieren/konfigurieren. Hierzu wird über eine Nutzereingabe, beispielsweise über das Internet oder über ein elektronisches Endgerät in Form eines Mobilfunktelefons, oder dergleichen, unter Angabe der Teilnehmerkennung eines zweiten Teilnehmers 5 eine Verbindung 8 zu dem zweiten Teilnehmer 5 definiert. Dies geschieht unter Einbeziehung einer Profildatei 13, wie sie in Figur 2 dargestellt ist.

Diese Verbindung, die in Figur 2 mit der Bezugsziffer 15 versehen ist, bekommt vom System eine Referenz, z.B. V001 zugeordnet. Optional kann es möglich sein, auch Verbindungen 8 mit mehreren Teilnehmern 5 in analoger Weise zu definieren, beispielsweise in Form einer Liste von empfangenden Teilnehmern: (5₁), (5₂), (5₃), ...). Die Art der Verbindung kann in diesem Schritt schon die möglichen Nachrichten, die in Figur 2 mit Bezugsziffer 16 versehen sind, einschränken. Beispielsweise wird durch die Teilnehmerkennung (5₁) = user@dienst.com bereits festgelegt, dass eine Email übertragen werden soll. Durch eine Angabe (5₂) = +49172555666 wird eine Telefonverbindung festgelegt, über die beispielsweise Audiodaten oder Videodaten übertragen werden können. Eine mögliche Ausgestaltung ist es, die Verbindung 8 als eine Verbindung zwischen dem auslösenden Teilnehmer 3 und dem Empfänger 5 festzulegen. In diesem Fall muss die Vermittlungseinrichtung 1 noch in der Lage sein, die Teilnehmerkennung von Teilnehmer 3 in Erfahrung zu bringen und zusätzlich eine Verbindung 9 zum Teilnehmer 3 aufzubauen.

Die eventbasierte Vermittlungseinrichtung soll in der Lage sein, unterschiedliche Events von allgemeinen Telekommunikationsdiensten 4 entgegen zu nehmen. Nutzer oder Administratoren des Systems können über eine externe Nutzereingabe neue Events 14 in der Profildatei 13 anlegen und jedes Events 14 erhält vom System eine Referenz, z.B. E001, E002, usw. Damit diese Events 14 wirksam werden können, müssen an dem Dienst 4, der Events auslösen soll, diese Events 14 auch bekannt gemacht werden und es muss eine Verbindung 7 zwischen dem Event auslösenden System und dem eventbasierten Vermittlungssystem bestehen. Beispielsweise kann vorgesehen sein, dass die Events 14 der Profildateien 13, die in einem Datenspeicher 2 abgelegt sind, auf den die Vermittlungseinrichtung 1 Zugriff hat, von der Vermittlungseinrichtung 13 über die Verbindung 7, die eine Datenschnittstelle symbolisiert, zu dem Dienst 4, beispielsweise zu einer dem Dienst 4 zugeordneten Rechnereinheit, übertragen werden.

In einem weiteren Schritt werden die Nachrichten 16 in der Profildatei 13 und/oder die Art der Übermittlung, beispielsweise Text, Sprache, Email, Video, und dergleichen, definiert. Eine Textnachricht könnte zum Beispiel in der Form N001="Alles Gute zum Geburtstag" hinterlegt werden. Ein Sprachanruf kann beispielsweise einfach durch N002=Sprachanruf definiert werden. In diesem Fall würde eine Telefonverbindung als Ergebnis der eventbasierten Vermittlung aufgebaut werden.

Über die Nutzereingabe können nun die zuvor definierten Events 14 mit den definierten Nachrichten 16 und Verbindungen 15 verknüpft werden. Dies kann zum Beispiel in einer Profildatei 13 in Form einer Tabelle geschehen, wie sie in Figur 2 dargestellt ist.

Wenn das Vermittlungssystem 100 eingerichtet ist, ist der Ablauf wie folgt.

Ein erster Teilnehmer 3 nutzt über eine Verbindung 6 einen Telekommunikationsdienst 4. Beispielsweise kann der Teilnehmer 3 über ein ihm zugeordnetes elektronisches Endgerät ein Bild aufnehmen und zum Zwecke der bildbasierten Suche über die Verbindung 6 an eine zentrale Rechnereinheit des Dienstes 4 übertragen. Die Vermittlungseinrichtung 1 hat zuvor die in der Profildatei 13 abgelegten Events 14, bei denen es sich ebenfalls um Bilder handelt, über eine Verbindung 7 an die Rechnereinheit des Dienstes 4 übertragen. Nachdem das vom ersten Teilnehmer 3 erzeugte Bild in der Rechnereinheit des Dienstes 4 angekommen ist, wird es dort mit den Events 14 verglichen. Wird dabei eine Übereinstimmung festgestellt, wird das entsprechende Bild, bei dem es sich dann ja um ein Event handelt, über die Verbindung 7 von der zentralen Rechnereinheit des Dienstes 4 an die eventbasierte Vermittlungseinrichtung 1 übertragen. Anders ausgedrückt, der Dienst 4 löst ein vordefiniertes Event 14 E00x aus, und dieses Event 14 wird an die eventbasierte Vermittlungseinrichtung 1 über die Verbindung 7, beispielsweise gleichzeitig, übermittelt. Der genutzte Telekommunikationsdienst (4) kann entweder innerhalb des Telekommunikationsnetzes von Teilnehmer 3 sein, oder aber extern, beispielsweise in Form eines Internet basierten Dienstes.

Die Vermittlungseinrichtung 1 schaut in der Tabelle 13 nach, ob für das Event E00x ein Eintrag in der Profildatei vorliegt. Falls ja, wird die zugeordnete Verbindung 15 V00y aufgebaut, was in Figur 1 durch die Bezugsziffer 8 dargestellt ist, beziehungsweise die vordefinierte Nachricht 16 N00z über die Verbindung 16 V00y übermittelt, was in Figur 1 ebenfalls durch Bezugsziffer 8 dargestellt ist. Ist die Nachricht 16 dergestalt definiert worden, dass eine Verbindung zwischen den Teilnehmern 3 und 5 aufgebaut werden soll, so muss die Vermittlungseinrichtung 1 noch die Teilnehmerkennung von Teilnehmer 3 erfahren. Das wird vorzugsweise so realisiert, dass die Vermittlungseinrichtung 1 bei einem zentralen Systemelement 10 über eine Verbindung 12 anfragt, wer den Dienst 4 gerade nutzt beziehungsweise genutzt hat. Das Systemelement 10 fragt dazu bei dem Dienst 14 nach, was durch die Verbindung mit der Bezugsziffer 11 verdeutlicht ist. Das Systemelement 10 übermittelt über die Verbindung 12 die Teilnehmerkennung von Teilnehmer 3 an die Vermittlungseinrichtung 1. Dadurch kann die Vermittlungseinrichtung 1 die geforderte Verbindung 8, 9 zwischen den Teilnehmern 3 und 5 herstellen. Eine alternative Implementierung wäre es, wenn der Dienst 4 die Teilnehmerkennung von Teilnehmer 3 innerhalb des Events direkt über die Verbindung 7 an die Vermittlungseinrichtung 1 übermittelt.

Die vorliegende Erfindung betrifft unter anderem ein Verfahren zum Herstellen einer Kommunikation zwischen verschiedenen Teilnehmern 3, 5 in wenigstens einem Kommunikationsnetzwerk mittels einer Vermittlungseinrichtung 1. Dieses Verfahren ist durch folgende Schritte gekennzeichnet:
- ein erster Teilnehmer 3 nutzt über ein ihm zugeordnetes elektronisches Endgerät einen Dienst 4 in einem Kommunikationsnetz, wobei Informationen von dem elektronischen Endgerät des ersten Teilnehmers 3 zu einer dem Dienst 4 zugeordneten Rechnereinheit übertragen 6 werden,
- die dem Dienst 4 zugeordnete Rechnereinheit steht über eine Datenschnittstelle mit der Vermittlungseinrichtung 1 zur Übertragung 7 von Informationen in Verbindung, wobei in der Rechnereinheit oder in der Vermittlungseinrichtung 1 eine Überprüfung stattfindet, ob es sich bei den vom elektronischen Endgerät des ersten Teilnehmers 1 übertragenen Informationen um ein Event 14 handelt, wobei ein Event 14 eine vordefinierte Information darstellt, die in wenigstens einer der Vermittlungseinrichtung zugeordneten Profildatei 13 abgelegt ist,
- in der wenigstens einen Profildatei 13 ist jedem Event 14 wenigstens eine Verbindungskennung 15 zu zumindest einem elektronischen Endgerät wenigstens eines zweiten Teilnehmers 5 sowie wenigstens eine vordefinierte Nachricht 16 zugeordnet, und bei Feststellung, dass es sich bei der Informationen um ein Event 14 handelt, wird von der Vermittlungseinrichtung 1 die dem Event 14 zugeordnete Verbindungskennung 15 zum Aufbau einer Verbindung zu dem zumindest einen elektronischen Endgerät des wenigstens einen zweiten Teilnehmers 5 aktiviert und die vordefinierte Nachricht 16 ausgeführt.

### Bezugszeichenliste

- 1: Eventbasierte Vermittlungseinrichtung
- 2: Datenspeicher für Events, Verbindungen, hinterlegte Nachrichten und Verknüpfungstabellen
- 3: Initiierender erster Teilnehmer
- 4: Vom ersten Teilnehmer genutzter Dienst
- 5: Weitere zweite Teilnehmer, die eventbasiert Nachrichten erhalten sollen
- 6: Verbindung, über die der erste Teilnehmer Dienste nutzt
- 7: Verbindung, über die die Vermittlungseinrichtung Events von den Diensten erhält
- 8: Verbindungen, über die die zweiten Teilnehmer Nachrichten vom ersten Teilnehmer erhalten
- 9: Verbindung, die in bestimmten Fällen auf Basis eines Events aktiviert wird beispielsweise um eine direkte Sprachverbindung zwischen den Teilnehmern aufzubauen
- 10: zentrales Systemelement, welches die Teilnehmerkennung der die Dienste nutzenden ersten Teilnehmer zumindest zeitweise speichert
- 11: Verbindung, über die die Dienste die Teilnehmerkennungen der ersten Teilnehmer an das zentrale Systemelement übermitteln
- 12: Verbindung, über die die eventbasierte Vermittlungseinrichtung die Teilnehmerkennungen der ersten Teilnehmer im Systemelement anfragen kann.
- 13: Profildatei (Tabelle)
- 14: Event
- 15: Verbindungskennung
- 17: Vordefinierte Nachricht
- 100: Vermittlungssystem

## Patentansprüche

1. Verfahren zur Kommunikation zwischen elektronischen Endgeräten in wenigstens einem Kommunikationsnetzwerk mittels einer Vermittlungseinrichtung (1), **gekennzeichnet durch** folgende Schritte:
- von einem ersten elektronischen Endgerät wird eine Information zu einer Rechnereinheit übertragen;
- die Rechnereinheit steht über eine Datenschnittstelle mit der Vermittlungseinrichtung (1) zur Übertragung (7) von Informationen in Verbindung, wobei in der Rechnereinheit oder in der Vermittlungseinrichtung (1) eine Überprüfung stattfindet, ob es sich bei einer vom ersten elektronischen Endgerät übertragenen Information um eine vordefinierte Informationen (14) handelt, die in wenigstens einer der Vermittlungseinrichtung (1) zugeordneten Profildatei (13) abgelegt ist,
- in der wenigstens einen Profildatei (13) ist jeder vordefinierten Information (14) wenigstens eine Verbindungskennung (15) zu zumindest einem zweiten elektronischen Endgerät sowie wenigstens eine vordefinierte Nachricht (16) zugeordnet, und bei Feststellung, dass es sich bei der Information um eine vordefinierte Information (14) handelt, wird von der Vermittlungseinrichtung (1) die der vordefinierten Information (14) zugeordnete Verbindungskennung (15) zum Aufbau einer Verbindung zu dem zumindest einen zweiten elektronischen Endgerät aktiviert und die vordefinierte Nachricht (16) ausgeführt.

2. Verfahren nach Anspruch 1, **dadurch gekennzeichnet, dass** in der Rechnereinheit die Überprüfung stattfindet, ob es sich bei der vom ersten elektronischen Endgerät übertragenen Information um eine vordefinierte Information handelt, dass dazu die in wenigstens einer Profildatei (13) abgelegten vordefinierten Informationen (14) von der Vermittlungseinrichtung (1) über die Datenschnittstelle zu der Rechnereinheit übertragen werden, dass in der Rechnereinheit die von dem ersten elektronischen Endgerät übertragene Information mit den von der Vermittlungseinrichtung (1) übertragenen vordefinierten Informationen (14) verglichen werden, dass bei Feststellung einer Übereinstimmung eine entsprechende Information als vordefinierte Information über die Datenschnittstelle von der Rechnereinheit an die Vermittlungseinrichtung (1) übertragen wird, dass die entsprechende Information von der Vermittlungseinrichtung (1) mit den in der wenigstens einen Profildatei (13) abgelegten vordefinierten Informationen (14) verglichen wird und dass bei Feststellung einer Übereinstimmung von der Vermittlungseinrichtung (1) die der entsprechenden vordefinierten Information (14) in der wenigstens einen Profildatei (13) zugeordnete Verbindungskennung (15) zum Aufbau einer Verbindung zu dem zumindest einen zweiten elektronischen Endgerät aktiviert und die vordefinierte Nachricht (16) ausgeführt wird.

3. Verfahren nach Anspruch 1 oder 2, **dadurch gekennzeichnet, dass** in der Vermittlungseinrichtung (1) die Überprüfung stattfindet, ob es sich bei einer vom ersten elektronischen Endgerät übertragenen Information um eine vordefinierte Information handelt, dass dazu die vom ersten elektronischen Endgerät an die Rechnereinheit übertragene Information über die Datenschnittstelle an die Vermittlungseinrichtung (1) übertragen wird, dass in der Vermittlungseinrichtung (1) die von der Rechnereinheit übertragenen Informationen mit den in wenigstens einer Profildatei (13) abgelegten vordefinierten Informationen (14) verglichen werden und dass bei Feststellung einer Übereinstimmung von der Vermittlungseinrichtung (1) die der vordefinierten Information (14) in der wenigstens einen Profildatei (13) zugeordnete Verbindungskennung (15) zum Aufbau einer Verbindung zu dem zumindest einen zweiten elektronischen Endgerät aktiviert und die vordefinierte Nachricht (16) ausgeführt wird.

4. Verfahren nach einem der Ansprüche 1 bis 3, **dadurch gekennzeichnet, dass** die wenigstens eine Profildatei (13) in einem Datenspeicher (2) abgelegt ist, dass der Datenspeicher (2) eine Schnittstelle zu wenigstens einer externen Eingabeeinrichtung aufweist und dass die in wenigstens einer Profildatei (13) abgelegten Daten (14, 15, 16) über die wenigstens eine externe Eingabeeinrichtung erzeugt und/oder bearbeitet werden oder werden können.

5. Verfahren nach einem der Ansprüche 1 bis 4, **dadurch gekennzeichnet, dass** nach Aktivierung der Verbindung zu dem zumindest einen zweiten elektronischen Endgerät die vordefinierte Nachricht (16) derart ausgeführt wird, dass eine der Nachricht (16) zugeordnete Information an das zweite elektronische Endgerät übertragen wird.

6. Verfahren nach einem der Ansprüche 1 bis 5, **dadurch gekennzeichnet, dass** nach Aktivierung der Verbindung zu dem zumindest einen zweiten elektronischen Endgerät die vordefinierte Nachricht (16) derart ausgeführt wird, dass die Vermittlungseinrichtung (1) eine Adresskennung des ersten elektronischen Endgeräts ermittelt und dass eine Kommunikationsverbindung zwischen dem ersten elektronischen Endgerät und wenigstens einem zweiten elektronischen Endgerät hergestellt wird.

7. Vermittlungseinrichtung (1) zum Herstellen einer Kommunikation zwischen elektronischen Endgeräten in zumindest einem Kommunikationsnetzwerk, aufweisend eine Datenschnittstelle zu einer Rechnereinheit in einem Kommunikationsnetz zur Übertragung (7) von Informationen zwischen der Rechnereinheit und der Vermittlungseinrichtung (1), wenigstens eine der Vermittlungseinrichtung (1) zugeordnete Profildatei (13), aufweisend eine Anzahl von vordefinierten Informationen (14), wobei jeder vordefinierten Information (14) wenigstens eine Verbindungskennung (15) zu zumindest einem zweiten elektronischen Endgerät sowie wenigstens eine vordefinierte Nachricht (16) zugeordnet ist, weiterhin aufweisend eine Vergleichseinrichtung zum Vergleichen von auf die Vermittlungseinrichtung (1) übertragenen Informationen mit in wenigstens einer Profildatei abgelegten vordefinierten Informationen (14), wenigstens eine Schnittstelle zu wenigstens einem zweiten elektronischen Endgerät, sowie eine Aktivierungseinrichtung, die dazu ausgebildet ist, dass bei Feststellung, dass es sich bei einer auf die Vermittlungseinrichtung (1) übertragenen Information um eine vordefinierte Information (14) handelt, von der Vermittlungseinrichtung (13) die der vordefinierten (14) zugeordnete Verbindungskennung (15) zum Aufbau einer Verbindung zu dem zumindest einen zweiten elektronischen Endgerät aktivierbar und die vordefinierte Nachricht (16) ausführbar ist.

8. Vermittlungseinrichtung nach Anspruch 7, **dadurch gekennzeichnet, dass** diese Mittel zur Durchführung des Verfahrens nach einem der Ansprüche 1 bis 6 aufweist.
